## Europäisches Patentamt

## European Patent Office

## Office européen des brevets

(19)

(11) Veröffentlichungsnummer: **0 200 716**
**B1**

(12) **EUROPÄISCHE PATENTSCHRIFT**

(45) Veröffentlichungstag der Patentschrift:
**19.07.89**

(51) Int. Cl.⁴: **F26B 3/08, B01J 8/18**

(21) Anmeldenummer: **86890111.7**

(22) Anmeldetag: **23.04.86**

(54) Wirbelbetttrockner mit Heizflächen.

(30) Priorität: **23.04.85 AT 1210/85**

(43) Veröffentlichungstag der Anmeldung:
**10.12.86 Patentblatt 86/45**

(45) Bekanntmachung des Hinweises auf die Patenterteilung:
**19.07.89 Patentblatt 89/29**

(84) Benannte Vertragsstaaten:
**BE CH DE FR GB IT LI LU NL SE**

(56) Entgegenhaltungen:
**US-A- 3 800 427**

(73) Patentinhaber: **WAAGNER-BIRO
AKTIENGESELLSCHAFT,
Stadlauer-Strasse 54 Postfach 11, A-1221 Wien(AT)**

(72) Erfinder: **Beckmann, Georg, Dr. Dipl.-Ing.,
Jacquingasse 55/10, A-1030 Wien(AT)**

(74) Vertreter: **Wallner, Gerhard, Dipl.-Ing., Waagner-Biro
Aktiengesellschaft Patentreferat Postfach 11,
A-1221 Wien(AT)**

## Beschreibung

Die Erfindung betrifft einen Wirbelbetttrockner mit in das verwirbelte Schüttgut eintauchenden und zumindest teilweise überfluteten Heizflächen, bei dem das Wirbelbettgehäuse vom Anströmboden aufbauend eine untere und eine obere Kammer aufweist, insbesondere für Kohlen mit großem Feuchtigkeitsgehalt, wie z.B. gegebenenfalls Braunkohle.

Bei Wirbelbetteinrichtungen ist die Höhe der Wirbelschichte nicht nur durch die Mitnahmekraft des Fluidisierungsmittels begrenzt, sondern auch infolge von Labilitätserscheinungen durch die flächige Ausdehnung bzw. Breite der fluidisierten Wirbelschichte mit steigender Schüttgutschichte gegeben. Diese Labilitätserscheinungen können durch die Wahl des Abstandes zweier benachbarter Heizflächen beeinflußt werden. Versuche zeigten, daß die maximal erreichbare Schichtdicke bei Trocknern geringer ist als bei Kühlern.

Aus der US-A 3 800 427 ist ein Wirbelbett-Kohletrockner bekannt, bei dem vertikal angeordnete, parallel zueinander stehende Heizplatten in das Wirbelbett eintauchen.

Aus der CH-PS 613 874 und der DE-OS 2 119 463 ist es bekannt, zur Verbesserung des Wärmeüberganges den Wirbelbettapparat als Gleich- oder Gegenstromwärmetauscher auszubilden, wobei zwei Wirbelbettapparate übereinander angeordnet sind, die miteinander wirkungsmäßig verbunden sind. Durch diese Konstruktion soll die Kontaktzeit verlängert werden, wobei auch mehr Möglichkeiten zur Beheizung des Apparates eingebaut werden können. Nachteilig bei diesen Konstruktionen ist der relativ komplizierte Aufbau, wobei durch die eingebauten Drosselstrecken eine Entmischung durchgeführt wird, so daß nur die schweren Teile unten und oben, die leichten Teile, insbesondere Feinstaub, durch das Fluidisierungsmedium ausgetragen werden. Besonders kritisch ist die Konstruktion im Bereich der engsten Querschnitte.

Die vorliegende Erfindung hat es sich zur Aufgabe gestellt, die bekannten Wirbelschichtapparate zu verbessern, indem größere Höhen der Wirbelschichten auf gegebener Querschnittsfläche bzw. Grundfläche verarbeitet werden können, wobei die steigende Menge an benötigtem Fluidisierungsgas allein durch die bei der Trocknung entstehenden Brüden gedeckt wird, wodurch der absolute Brüdengehalt im Abgas erhöht wird und damit leichter auskondensiert werden kann. Dies führt nicht nur zu einer Verringerung des Grundflächenbedarfs sondern auch zu einer Reduktion der Menge an benötigtem Fluidisierungsgas für die Trocknung einer vorgegebenen Schüttgutmenge, wodurch die Umweltbelastung verkleinert wird. Überraschenderweise wurde eine Verminderung der Labilitätserscheinungen festgestellt, die besonders bei gekreuzter Anordnung der vertikal stehenden Heizflächen auffallen. Dadurch wurde es möglich, die Höhe der Wirbelschicht zu vervielfachen. Ein positiver Nebenerfolg ist dadurch gegeben, daß die Menge an benötigtem Fluidisierungsmittel je Tonne Durchsatz abnimmt und gleichzeitig der Dampfgehalt des abströmenden Fluidisierungsmittels zunimmt, so daß dessen Reinigung vor dem Ablassen in die freie Atmosphäre erleichtert wurde. Die Erfindung erlaubt somit nicht nur eine Durchsatzleistungserhöhung pro Quadratmeter Plenumfläche, sondern auch eine Verbesserung des Umweltschutzes und eine Verringerung der Investitionskosten pro Tonne Durchsatz.

Der erfindungsgemäße Wirbelbetttrockner ist dadurch gekennzeichnet, daß die Kammern des Wirbelbettgehäuses reckteckige Querschnitte aufweisen, sich nach oben hin vergrößern, daß ein die Kammern verbindendes Gehäusezwischenstück einen rechteckigen Querschnitt konstanter Größe hat und daß in jeder Kammer Heizflächen angeordnet sind, die aus vertikal stehenden parallelen Tafeln bestehen, wobei die Ebenen der Tafeln der Heizflächen in der unteren Kammer und die Ebenen der Tafeln der Heizflächen in der oberen Kammer des Wirbelbettgehäuses aufeinander senkrecht stehen. Wesentliche Ausgestaltungen der Erfindung sind in den Unteransprüchen angegeben.

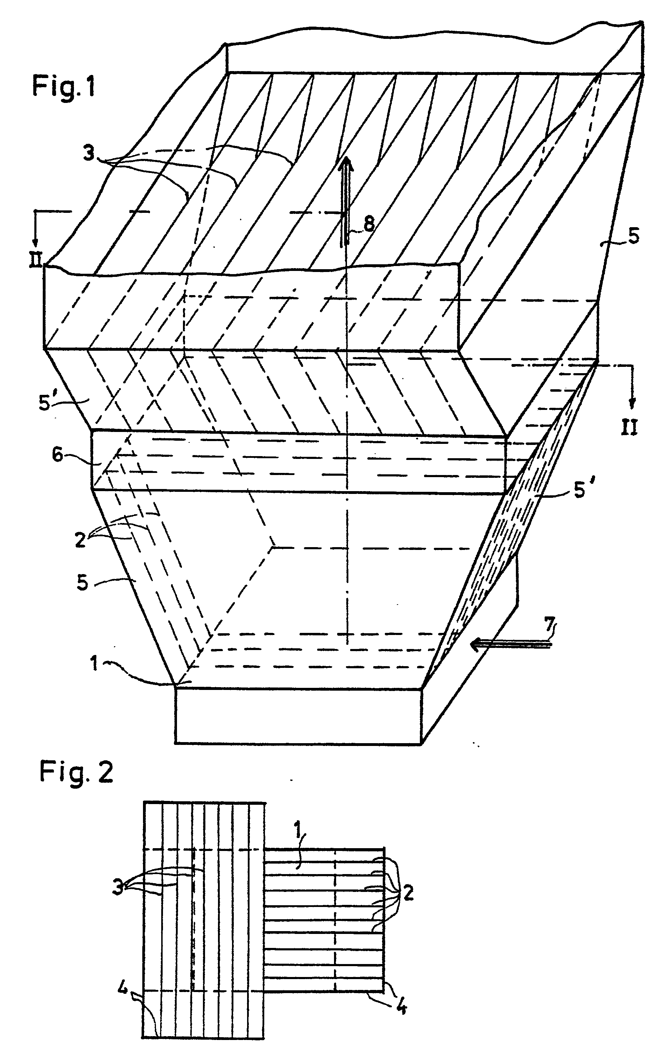

Die Erfindung ist in den angeschlossenen Fig. 1 und 2 beispielsweise und schematisch dargestellt. Fig. 1 zeigt axonometrisch einen Wirbelbetttrockner und Fig. 2 im verkleinerten Maßstab einen Schnitt gemäß Schnittlinie II in Fig. 1.

Der Wirbelbetttrockner baut von einem Anströmboden (1) bzw. Plenum auf, durch welchen das einströmende Fluidisierungsmittel (7) gleichmäßig über den Anströmboden verteilt wird. Auf dem Anströmboden (1) ist das Gehäuse des Wirbelbetttrockners aufgebaut, welches vier Seitenwände (4) aufweist, von welchen zwei Wandteile (5) vertikal und zwei Wandteile (5') schräg nach außen geneigt sind. Die Schräge der Wandteile (5') bestimmt sich aus der Bedingung, daß das Fluidisierungsmittel in jedem Querschnitt gleiche Geschwindigkeit aufweist, wobei die Zunahme an Fluidisierungsmittel durch Ausdampfung des beim Trocknen freiwerdenden Wassers berücksichtigt wurde. Eine Wärmeänderung des Fluidisierungsmittels im Trockner ist konstruktiv nicht vorgesehen. Der Wärmeeintrag erfolgt über die Heizflächen (2), die das Wirbelbett in schmale Streifen zerlegen, wodurch die Vergleichmäßigung des aufströmenden Fluidisierungsmittels erreicht wird. An diese erste Kammer des Wirbelbetttrockners mit den Heizflächen (2) schließt sich ein Gehäuse-Zwischenstück (6) an, welches im wesentlichen nur vertikal stehende Seitenwände aufweist und an welches ein zweiter Wirbelbetttrockner anschließt, der jedoch kein Plenum aufweist und bei dem die vertikal stehenden Heizflächen (3) normal zu den Ebenen der Heizflächen (2) angeordnet sind. Das Gehäuse besteht aus vertikalen (5) und schräg angeordneten Wandteilen (5'). Durch die gekreuzte Anordnung der Heizflächen (2, 3) ergibt sich eine Neuorientierung des Fluidisierungsmittels, welche einer Vergleichmäßigung entspricht, so daß praktisch die doppelte Höhe des Schüttgutes im Wirbelbett erreicht wird. Da sich der Querschnitt von unten nach oben erweitert, kann man aber mit der drei- bis vierfachen Menge an Durchsatzgut rechnen. Das abströmende Fluidisierungsmittel mit den Brüden und Stäuben ist durch Pfeil (8) angedeutet. In Fig. 2 sieht man besonders die gekreuzte Anordnung der Heizflächen (2, 3) und die Erweiterung des Fließbettes von unten nach oben. Die wesentlichsten Merkmale der Erfindung bestehen somit darin, daß die Ausdampfung des Wirbelbettes bei der Trocknung von Schüttgütern zur Selbstfluidisierung herangezogen wird und daß oberhalb eines ersten Heizflächenpaketes ohne Anordnung eines Zwischenplenums ein zweites Heizflächenpaket angeordnet wird, wobei die beiden Heizflächenpakete zueinander senkrecht stehen. Die Erfindung erlaubt eine kompakte Anordnung des Wirbelbetttrockners, indem dieser eine besonders hohe Höhe erreicht und auch eine Verbilligung, da die Bodenfläche des Wirbelbetttrockners auf mindestens ein Drittel der sonst üblichen Fläche abnimmt. Hand in Hand ist damit eine Reduzierung der Fluidisierungsmenge auf ein Drittel und eine Reduzierung der abströmenden Gasmenge um etwa ein Drittel gegeben, wohingegen der Dampfgehalt auf das KMehrfache angesteigen ist. Der zuletzt genannte Vorteil wirkt sich besonders bei der Niederschlagung des Dampfes infolge der höheren Dampfkonzentration vor der Einleitung in die freie Atmosphäre aus.

**Patentansprüche**

1) Wirbelbettrockner mit in das verwirbelte Schüttgut eintauchenden und zumindest teilweise überfluteten Heizflächen, bei dem das Wirbelbettgehäuse vom Anströmboden aufbauend eine untere und eine obere Kammer aufweist, insbesondere für Kohlen mit großem Feuchtigkeitsgehalt, wie z.B. grubenfeuchte Braunkohle, dadurch gekennzeichnet, daß die Kammern des Wirbelbettgehäuses rechteckige Querschnitte aufweisen, die sich nach oben hin vergrößern, daß ein die Kammern verbindendes Gehäusezwischenstück (6) einen rechteckigen Querschnitt konstanter Größe hat und daß in jeder Kammer Heizflächen (2, 3) angeordnet sind, die aus vertikal stehenden, parallelen Tafeln bestehen, wobei die Ebenen der Tafeln der Heizflächen (2) in der unteren Kammer und die Ebenen der Tafeln der Heizflächen (3) in der oberen Kamer des Wirbelbettgehäuses aufeinander senkrecht stehen.

2) Wirbelbetttrockner nach Anspruch 1, dadurch gekennzeichnet, daß die einzelnen Tafeln der Heizflächen (2,3) eine trapezförmige Form aufweisen.

3) Wirbelbetttrockner nach Anspruch 1, dadurch gekennzeichnet, daß die Seitenwände (4) des Wirbelbettgehäuses jeweils mindestens einen vertikalen und mindestens einen nach außen geneigten ebenen Wandteil (5,5') aufweisen.

4) Wirbelbetttrockner nach Anspruch 1, dadurch gekennzeichnet, daß im quaderförmigen Gehäusezwischenstück (6) zwischen den einzelnen Heizflächen (2,3) die Zu- und Ableitungen der einzelnen Heizflächen (2,3) angeordnet sind.

**Claims**

1. Fluidized-bed dryer with heating surfaces dipped in the fluidized bulk goods or at least partially flooded in which the fluidized-bed housing rises from the tuyère bottom and comprises an upper and lower chamber, in particular for coal with a high content of moisture such as pit-wet lignite, characterized in that the chambers of the fluidized-bed housing have rectangular cross sections enlarging towards the top and that an intermediary housing element (6) joining the chambers has a rectangular section of constant size and that each chamber is equipped with heating surfaces (2, 3) consisting of parallel plates in a vertical upright position, whereby the planes of the plates of the heating surfaces (2) in the lower chamber an the planes of the plates of the heating surfaces (3) in the upper chamber of the fluidized-bed housing are mutually perpendicular.

2. Fluidized-bed dryer according to claim 1, characterized in that the various plates of the heating surfaces (2, 3) are shaped as trapezoids.

3. Fluidized-bed dryer according to claim 1, characterized in that each of the lateral walls (4) of the fluidized-bed housing comprises at least one vertical and one inclined and even wall element (5, 5').

4. Fluidized-bed dryer according to claim 1, characterized in that the supply and discharge lines of the different heating surfaces (2, 3) are located in the intermediary housing elements (6) shaped like a parallelepiped and located between the different heating surfaces (2, 3).

**Revendications**

1. Dispositif de séchage à l'état fluidisé avec surfaces de chauffage plongées dans les matières en vrac et au moins partiellement inondées dont la boîte du dispositif de séchage montant du fond à tuyères comprend une chambre inférieure et une chambre supérieure, en particulier pour charbon d'un taux d'humidité élevé comme par exemple du lignite humide de la mine, caractérisé en ce que les chambres de la boîte du dispositif de séchage ont des sections rectangulaires qui s'élargissent vers le haut et qu'un élément intermédiaire de la boîte (6) liant les chambres a une section rectangulaire de dimensions constantes et que chaque chambre est équipée de surfaces de chauffage (2, 3) qui consistent en plaques parallèles et verticales, les plans des plaques des surfaces de chauffage (2) dans la chambre inférieure et les plans des plaques des surfaces de chauffage (3) dans la chambre supérieure étant perpendiculaires entre eux.

2. Dispositif de séchage à l'état fluidisé suivant revendication 1, caractérisé en ce que les différentes plaques des surfaces de chauffage (2, 3) ont une forme trapézoïdale.

3. Dispositif de séchage à l'état fluidisé suivant revendication 1, caractérisé en ce que chacune des parois latérales (4) de la boîte du dispositif de séchage possède au moins un élément vertical et au moins un élément plan incliné (5, 5').

4. Dispositif de séchage à l'état fluidisé suivant revendication 1, caractérisé en ce que les conduites d'amenée et de décharge des différentes surfaces de chauffage (2, 3) se trouvent dans l'élément intermédiaire de la boîte (6) en forme de parallélépipède situé entre les différentes surfaces de chauffage (2, 3).

Fig.1

Fig. 2